**Europäisches Patentamt**

**European Patent Office**

**Office européen des brevets**

(11) Veröffentlichungsnummer: **0 451 344 A1**

## (12) EUROPÄISCHE PATENTANMELDUNG

(21) Anmeldenummer: **90123046.6**

(22) Anmeldetag: **01.12.90**

(51) Int. Cl.5: **B65G 27/02**, B65G 47/51

(30) Priorität: **11.04.90 DE 9004198 U**

(43) Veröffentlichungstag der Anmeldung:
**16.10.91 Patentblatt 91/42**

(84) Benannte Vertragsstaaten:
**CH DE FR IT LI NL**

(71) Anmelder: **GRONINGER & CO. GMBH**
**Hofäckerstrasse 9**
**W-7180 Crailsheim(DE)**

(72) Erfinder: **Neber, Friedrich, Dipl.-Ing. (FH)**
**Scheffelsteige 17**
**W-7170 Schwäbisch Hall(DE)**

(74) Vertreter: **Kratzsch, Volkhard, Dipl.-Ing.**
**Mülbergerstrasse 65**
**W-7300 Esslingen(DE)**

(54) **Pufferspeicher für längliche Gegenstände.**

(57) Ein Pufferspeicher (10) für längliche Gegenstände (11), vor allem Fertigspritzen (12), die in etwa senkrechter Lage transportiert werden, hat mindestens einen Speicherkörper (20). Dieser weist eine spiralförmige Führungsbahn (22) auf, die einen die Gegenstände (11) aufnehmenden Schlitz (21) enthält. Der Eingang der Führungsbahn 22) ist an einen Zulaufabschnitt (25) und der Ausgang an einen Ablaufabschnitt (26) einer Transportstrecke anschließbar. Der Pufferspeicher (10) ist durch zumindest einen den Speicherkörper (20) in - die Gegenstände (11) in der Führungsbahn (22) in Transportrichtung vorwärtsbewegende - Schwingungen versetzenden Schwingantrieb (41) gekennzeichnet, der als handelsüblicher Schwingförderer (42) ausgebildet ist. Der Pufferspeicher (10) ist einfach, kompakt und kostengünstig und für Sterilbetrieb geeignet.

Fig. 1

Die Erfindung bezieht sich auf einen Pufferspeicher für längliche Gegenstände der im Oberbegriff des Anspruchs 1 genannten Art.

Bei einem bekannten Pufferspeicher dieser Art werden die Gegenstände durch die schlitzförmige Führungsbahn hindurch in Transportrichtung vorwärts geschoben, wobei die Transportrichtung mit Vorzug vom radial äußeren Ende des Spiralganges zum radial inneren Ende verlaufen soll. Die Transportbewegung der Gegenstände erfolgt mittels einer besonderen Antriebseinrichtung, die oberhalb des Speicherkörpers plaziert ist und einen umlaufend angetriebenen Speichenring aufweist, an dem einzelne Bürstenleisten gehalten sind, die Bürsten tragen, welche die in der spiralförmigen Führungsbahn befindlichen Gegenstände von oben her berühren. Zwischen den Bürsten und den Gegenständen besteht ein zumindest derart starker Berührungskontakt, daß dadurch den Gegenständen von den umlaufenden Bürsten eine entsprechende Antriebsbewegung zum Hindurchschieben durch die Führungsbahn erteilt wird. Alternativ dazu soll bei Flaschen als zu transportierende Gegenstände unterhalb der spiralförmigen Führungsbahn eine umlaufend angetriebene Scheibe vorgesehen sein, auf der die Flaschen mit erhöhter Haftreibung stehen, so daß die Flaschen durch die Umlaufbewegung der Scheibe durch die spiralförmige Führungsbahn hindurchgeschoben werden. Ferner ist dieser Pufferspeicher im Bereich des an das radial innere Ende des Spiralganges anschließenden Ablaufabschnittes mit einer Bremseinrichtung versehen, die im Fall eines Staus oder einer Störung in Funktion treten und die Abgabe von Gegenständen aus dem Pufferspeicher verhindern soll.

Ein derartiger Pufferspeicher ist für solche zu transportierende Gegenstände nicht geeignet, bei denen ein Sterilbetrieb verlangt wird. Auch läßt sich dieser Pufferspeicher dann nicht einsetzen, wenn solche Gegenstände am oberhalb des Speicherkörpers befindlichen Ende noch daraus vorstehende Teile, z. B. Kolbenstangen oder ähnliches, aufweisen. Der Transportantrieb mittels unten liegender, umlaufend angetriebener Scheibe versagt in beiden Fällen. Der Transportantrieb mittels der umlaufend angetriebenen, oberhalb des Speicherkörpers befindlichen Bürsten, die an den zu transportierenden Gegenständen von oben her angreifen, ist wegen dieser von oben her erfolgenden Angriffsbewegung für den Sterilbetrieb nicht geeignet, wobei bei über das obere Ende überstehenden Teilen, z. B. Kolbenstangen, die zu transportierenden Gegenstände sich nicht mittels der Bürsten in der spiralförmigen Führungsbahn vorschieben lassen, sondern umkippen. Abgesehen davon ist der bekannte Pufferspeicher hinsichtlich dieser Antriebseinrichtung aufwendig, teuer, störanfällig und einer Sterilisierung im Falle eines gewünschten Sterilbetriebs nicht zugänglich.

gänglich.

Der Erfindung liegt die Aufgabe zugrunde, einen Pufferspeicher der eingangs genannten Art zu schaffen, der einfacher, kostengünstiger und einem Sterilbetrieb zugänglich ist.

Die Aufgabe ist bei einem Pufferspeicher der im Oberbegriff des Anspruchs 1 genannten Art gemäß der Erfindung durch die Merkmale im Kennzeichnungsteil des Anspruchs 1 gelöst. Vorteilhafte weitere Erfindungsmerkmale dazu ergeben sich zunächst aus den Ansprüchen 2 - 4. Dieser Schwingantrieb, insbesondere Schwingförderer, ist zunächst einfach, kompakt und kostengünstig. Er steht als kostengünstige, handelsübliche Antriebseinheit zur Verfügung. Ferner ergibt sich der Vorteil, daß der Pufferspeicher auf diese Weise einem Sterilbetrieb zugänglich ist. Beim Sterilbetrieb muß nur ein einziges Teil, nämlich der Speicherkörper, sterilisiert werden. Dies läßt sich schnell, einfach und kostengünstig und dabei garantiert zuverlässig bewerkstelligen. Der darunter oder darüber befindliche Schwingantrieb behindert diese Sterilisierung nicht. Aufgrund des Schwingantriebes werden die zu transportierenden Gegenstände, z. B. Fertigspritzen, durch eine Wurfbewegung transportiert, d. h. sie bewegen sich etwa sprungartig in Transportrichtung, wobei jeweils der die Hängehalterung des Gegenstandes, insbesondere der Fertigspritze, bewirkende Teil, z. B. radial abstehende Flansch, sich kurzzeitig von der Oberseite beidseitig der spiralförmigen Führungsbahn abhebt. Die Gegenstände, insbesondere Fertigspritzen, stehen nur im Bereich ihrer Aufhängefläche in Berührung mit dem Speicherkörper und keinesfalls im Bereich, der sich weiter in der Mitte befindet, z. B. bei einer Fertigspritze der Mündungsbereich ist. Dieser bleibt also hygienisch einwandfrei. Der Pufferspeicher ist LF-tauglich (laminar flow-tauglich) und außerordentlich einfach in der Gestaltung. Es läßt sich eine Fördergeschwindigkeit bis zu mindestens 300 Stück / min. z. B. erzielen. Aufgrund des spiralförmigen Verlaufs der Führungsbahn wird das diesem Gestaltungstyp eigene, bekannte große Speichervolumen auf engem Raum erzielt. Pufferspeicher erfindungsgemäßer Art können an den verschiedensten Stellen zwischen zwei Arbeitsstationen angeordnet werden, z. B. auch in einem Bereich, auf dem mit eingesteckter Kolbenstange komplettierte Fertigspritzen von einer Arbeitsstation zur nächstfolgenden Verpackungsstation, z. B. Blistermaschine, transportiert werden sollen. Die hierbei relativ weit nach oben überstehenden Kolbenstangen stören nicht und behindern den Transport der Gegenstände, insbesondere Fertigspritzen, entlang der Spiralbahn des Speicherkörpers in keiner Weise. Da diese Transportbewegung in allen Fällen nahezu völlig berührungsfrei erfolgt, wobei die einzigen miteinander in Berührung gelangenden Stellen im Bereich der Hängehalterung liegen, ist auch die Geräuschentwicklung reduziert. Auch die Anzahl etwaiger Verschleißteile ist verringert, so daß auch dadurch die Stör- und Reparaturanfälligkeit des Pufferspeichers reduziert ist. Die Betriebssicherheit und Funktionsfähigkeit ist erheblich gesteigert.

Weitere vorteilhafte Erfindungsmerkmale ergeben sich aus den Ansprüchen 5 - 32.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen eines Pufferspeichers für längliche Gegenstände näher erläutert. Es zeigen:

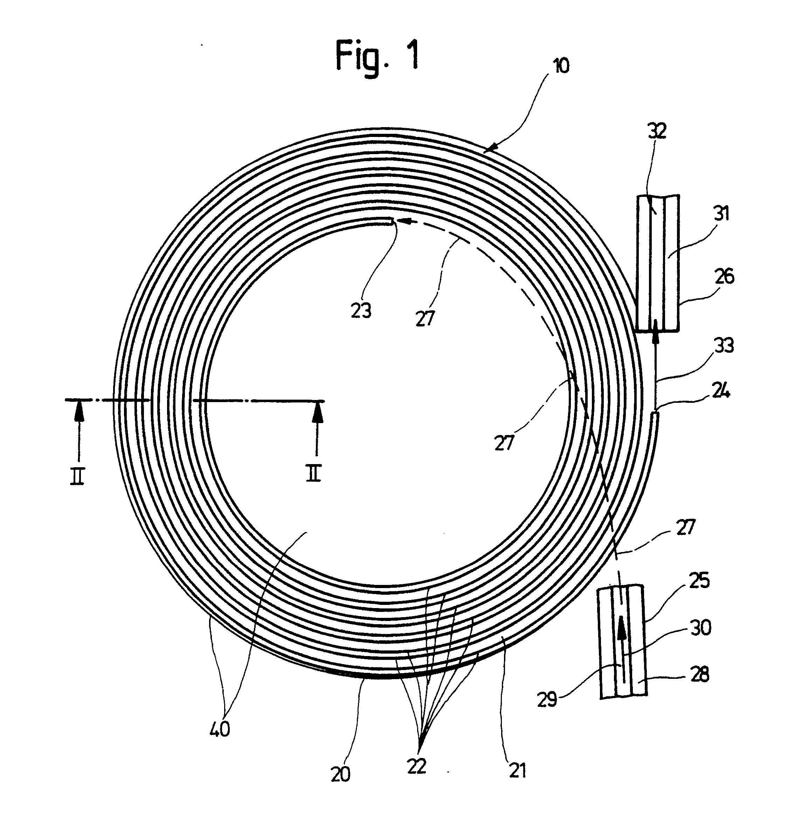

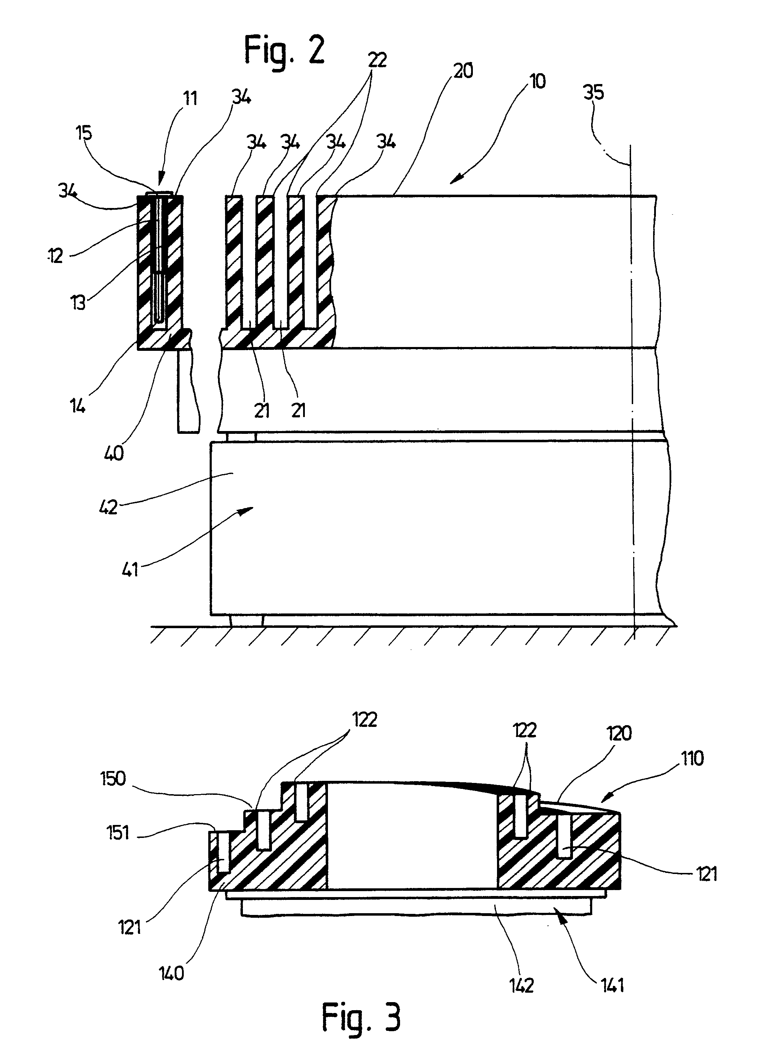

Fig. 1
eine schematische Draufsicht des Pufferspeichers gemäß einem ersten Ausführungsbeispiel,
Fig. 2
eine schematische Seitenansicht mit teilweisem Schnitt entlang der Linie II-II des Pufferspeichers in Fig. 1,
Fig. 3
einen schematischen Schnitt etwa entsprechend demjenigen in Fig. 2 eines Pufferspeichers gemäß einem zweiten Ausführungsbeispiel,
Fig. 4
einen schematischen Schnitt etwa entsprechend demjenigen in Fig. 3 eines Pufferspeichers gemäß einem dritten Ausführungsbeispiel,
Fig. 5, 6 und 7
jeweils einen schematischen Schnitt etwa entsprechend demjenigen in Fig. 2 eines Pufferspeichers gemäß einem vierten bzw. fünften bzw. sechsten Ausführungsbeispiel.

Der Pufferspeicher 10 gemäß dem ersten Ausführungsbeispiel in Fig. 1 und 2 ist generell für längliche Gegenstände 11 bestimmt, die in etwa senkrechter Lage und dabei mit Vorzug hängend transportiert werden sollen. Die Gegenstände 11 können im Prinzip beliebiger Art sein. Beim gezeigten Ausführungsbeispiel bestehen diese Gegenstände 11 vorzugsweise aus Fertigspritzen 12, die bei diesem Transport mittels des als Transporteinrichtung dafür ausgebildeten Pufferspeichers 10 je nachdem entweder noch nicht gefüllt oder bereits gefüllt sein können. Auch können die Fertigspritzen 12, wenn sie bereits im gefüllten Zustand vorliegen, schon derart fertig montiert sein, daß aus dem Spritzenzylinder 13 die dazugehörige Kolbenstange herausragt, was bei der Darstellung der Fertigspritze 12 in Fig. 2 noch nicht der Fall ist. Die in Fig. 2 schematisch angedeutete Fertigspritze 12 ist bereits gefüllt und enthält im Inneren auch den nicht sichtbaren Kolben, an dem jedoch noch nicht die Kolbenstange angebracht ist. Die nicht sichtbare Nadel ist durch eine auf-gesetzte Schutzhülle 14 geschützt. In üblicher Weise befindet sich am oberen Ende des Spritzenzylinders 13 ein davon radial abstehender und überkragender Flansch 15.

Der Pufferspeicher 10 kann prinzipiell an verschiedenen Stellen einer Transportstrecke, und dabei jeweils zwischen zwei Arbeitsstationen, angeordnet werden. So kann der Pufferspeicher 10 z. B. in Transportrichtung einer Füllstation vorgeschaltet sein, der aus dem Pufferspeicher 10 die noch nicht gefüllten Fertigspritzen 12 zum Füllen und Einsetzen des Kolbens zugeführt werden. Auch zwischen der Arbeitsstation, in der das Füllen und Einsetzen des Kolbens geschieht, und einer nachgeschalteten Arbeitsstation, in der z. B. das Etikettieren und Einsetzen der Kolbenstange in den Spritzenzylinder 13 geschieht, kann ebenfalls ein derartiger Pufferspeicher 10 angeordnet werden, ebenso wie zwischen der letztgenannten Arbeitsstation und z. B. einer dieser nachgeschalteten Verpackungsstation, z. B. Blistermaschine. Dabei können die einzelnen zwischen den Arbeitsstationen plazierten Pufferspeicher 10 allesamt z. B. gleichartig ausgebildet sein. Einzelheiten derartiger Pufferspeicher 10 sind nachstehend näher erläutert.

Der Pufferspeicher 10 in Fig. 1 und 2 weist mindestens einen Speicherkörper 20 auf, der eine spiralförmige, einen die Gegenstände 11 aufnehmenden Schlitz 21 enthaltende Führungsbahn 22 aufweist. Diese spiralförmige, geschlitzte Führungsbahn 22 hat einen Anfang, der den Eingang 23 bildet, und ferner ein Ende, das den Ausgang 24 bildet, wobei der Eingang 23 und der Ausgang 24 nur schematisch angedeutet sind. Der Eingang 23 ist an einen Zulaufabschnitt 25 und der Ausgang 24 an einen Ablaufabschnitt 26 einer ansonsten nicht weiter dargestellten Transportstrecke anschließbar. Der Zulaufabschnitt 25 ist der besseren Übersicht wegen auf dem Bereich, auf dem er den Speicherkörper 20 oben übergreift, nur durch den gestrichelten Verlauf 27 angedeutet.

Eine wesentliche Besonderheit des Pufferspeichers 10 liegt darin, daß der an den Zulaufabschnitt 25, 27 anschließbare Eingang 23 am radial inneren Ende und der an den Ablaufabschnitt 26 anschließbare Ausgang 24 am radial äußeren Ende der Führungsbahn 22 vorgesehen ist. Der Zulaufabschnitt 25 kann als schräg zum Eingang 23 abfallende Zuführrutsche 28 mit einem Schlitz 29 für die Führung der Gegenstände 11 ausgebildet sein, wobei der Schlitz 29 in die Führungsbahn 22 überleitet. Die Transportrichtung der Gegenstände 11 im Schlitz 29 ist in Fig. 1 mit einem Pfeil 30 angedeutet. Von Vorteil kann es sein, wenn die Zuführrutsche 28 etwa tangential zu dem innersten Spiralgang der Führungsbahn 22 ausgerichtet ist.

Der Ablaufabschnitt 26 ist als an das Niveau des Ausgangs 24 der Führungsbahn 22 anschließende Abführrutsche 31 mit einem Schlitz 32 für die Führung der Gegenstände 11 ausgebildet, der von der Führungsbahn 22 in Pfeilrichtung 33 ableitet. Die Abführrutsche 31 kann dabei horizontal oder vom Ausgang 24 ausgehend auch abfallend verlaufen. Vorteilhaft kann es ferner sein, wenn die Abführrutsche 31 etwa tangential zu dem äußersten Spiralgang der Führungsbahn 22 ausgerichtet ist. Sowohl die Zuführrutsche 28 als auch die Abführrutsche 31 sind in gleicher Weise wie der Speicherkörper 20 als Hängehalterung für die Gegenstände 11 ausgebildet, die somit im Schlitz 29, ferner im spiralförmigen Schlitz 21 und im Schlitz 32 hängend gehalten und in Transportrichtung gemäß den Pfeilen 30, 33 vorwärtsbewegt werden. In gleicher Weise wie die Zuführrutsche 25 und Abführrutsche 31 ist somit auch die spiralförmige Führungsbahn 22 als Hängehalterung für die Gegenstände 11 ausgebildet. Der Begriff "Hängehalterung" besagt, daß die Gegenstände 11 im Schlitz 29, 21 und 32 ohne die Notwendigkeit einer seitlichen Wandberührung und Führung dadurch gehalten sind, daß der etwa radial abstehende und überkragende Flansch 15 (Fig. 2 ) auf der beidseitig des Schlitzes 29, 21 und 32 befindlichen Wandteiloberseite aufliegt. Bei Fertigspritzen 12 ist dieser Flansch 15 in bekannter Weise nicht umlaufend ringförmig, sondern an zwei diametral gegenüberliegenden Stellen abgeflacht, so daß dieses Quermaß die Breite der Schlitze 29, 21 und 32 bestimmt, die somit zumindest geringfügig kleiner als dieses Quermaß und größer als der Durchmesser des Spritzenzylinders 13 bemessen ist, so daß die Fertigspritzen 12 ohne Berührung seitlicher Wände praktisch nur durch Aufliegen mit ihrem Flansch 15 auf der Wandteiloberseite und somit leichtgängig vorwärtsbewegt werden.

Der Speicherkörper 20 weist in der Gestaltung gemäß dem ersten Ausführungsbeispiel in Fig. 1 und 2 eine Platte 40 auf, die den spiralförmigen Schlitz 21 als Führungsbahn 22 enthält. Beim gezeigten Ausführungsbeispiel hat diese Platte 40 eine wesentliche Dicke, so daß der Schlitz 21 eine wesentliche Tiefe hat. Die Tiefe des Schlitzes 21 ist größer bemessen als die maximal mögliche Länge der mittels des Pufferspeichers 10 zu speichernden und zu transportierenden Gegenstände 11, insbesondere Fertigspritzen 12, gemessen vom Flansch 15 bis zu deren unterem Ende. Da die Breite des Schlitzes 21 größer als der Durchmesser des Spritzenzylinders 13 gewählt ist, haben die Fertigspritzen 12 im Schlitz 21 praktisch keine Wandberührung, so daß ein leichtgängiger Transport ohne etwaige Klemmgefahr möglich ist.

Beim ersten Ausführungsbeispiel in Fig. 1 und 2 verläuft die beidseitig des spiralförmigen Schlitzes 21 gebildete Oberseite 34, auf der die Fertigspritzen 12 jeweils mit ihrem Flansch 15 hängen und vorwärtsbewegt werden, bei allen Spiralwindungen innerhalb einer allen gemeinsamen Ebene, die hier waagerecht und dabei etwa rechtwinklig zur Achse 35 verläuft.

Eine weitere wesentliche Besonderheit des Pufferspeichers 10 gemäß dem ersten Ausführungsbeispiel liegt darin, daß der Speicherkörper 10 zumindest auf den Flächen, die mit den Gegenständen 11, insbesondere Fertigspritzen 12, in Berührung gelangen, aus einem Material mit guten Gleiteigenschaften und Antihafteigenschaften besteht, was zugleich eine möglichst gute Geräuschdämmung bewirkt. Besonders vorteilhaft ist es, wenn der Speicherkörper 10 aus Kunststoff und hierbei insbesondere aus Polyäthylen besteht. Auf diese Weise ist eine hochwirksame Geräuschminderung erreicht und eine gute Gleiteigenschaft und gute Antihafteigenschaft verwirklicht, so daß bei eingeschaltetem Pufferspeicher 10 möglichst wenig Geräusch beim Transport der Gegenstände 11, insbesondere Fertigspritzen 12, entsteht, ferner aufgrund guter Gleiteigenschaften eine gute, zuverlässige und reproduzierbare Transportbewegung gewährleistet ist und außerdem aufgrund guter Antihafteigenschaften Schmutz möglichst nicht am Speicherkörper 20 haften bleiben kann.

Ein weiteres wesentliches Merkmal des Pufferspeichers 10 liegt in dessen Antrieb. Hierzu ist ein den Speicherkörper 20 in die Gegenstände 11, insbesondere Fertigspritzen 12, in der Führungsbahn 22 in Transportrichtung vorwärtsbewegende Schwingungen versetzender Schwingantrieb 41 vorgesehen, der als Schwingförderer 42 ausgebildet ist, an dessen Antriebseinheit der Speicherkörper 20 befestigt ist. Beim ersten Ausführungsbeispiel in Fig. 1 und 2 ist dieser Schwingantrieb 41 unterhalb des Speicherkörpers 20 plaziert. Ein derartiger Schwingförderer 42 ist handelsüblich und steht als kostengünstige, praktisch einbaufertige Antriebseinheit zur Verfügung, auf die lediglich die Platte 40 aufgebracht und daran lösbar befestigt werden muß. Die Kosten für diesen Antrieb sind daher relativ gering. Da sich der Schwingförderer 42 unterhalb des Speicherkörpers 20 befindet, stellt er kein Problem dar, wenn ein besonderer steriler Betrieb beim Speichern und Transportieren der Gegenstände 11, insbesondere Fertigspritzen 12, verlangt wird. Der Pufferspeicher 10 hat insbesondere im Hinblick auf solche Anforderungen nach sterilem Betrieb vielfältige Vorteile. Die Gegenstände 11, insbesondere Fertigspritzen 12, werden bei eingeschaltetem Pufferspeicher 10, der durch den Schwingförderer 42 somit in Schwingungen versetzt wird, aufgrund erzeugter Wurfbewegungen transportiert. Dies hat den Vorteil, daß die Gegenstände 11, insbesondere Fertigspritzen 12, nur im Bereich ihrer Kontaktflächen, wo die Hängehalterung geschieht, und somit im Bereich des Flansches 15 außen und keineswegs im Bereich der Mündung, berührt werden. Es besteht durch die Hängehalterung und den Transport lediglich ein Berührungskontakt zwischen der Unterseite des Flansches 15 einerseits und der Oberseite 34 beidseitig des Schlitzes 29, 21, 32 andererseits. Der z. B. hier nach Anordnung des Pufferspeichers 10 zwischen zwei Arbeitsstationen oben noch offene Spritzenzylinder 13 bleibt im Bereich der Mündung dieser Öffnung unberührt, so daß dort keine etwaige Verunreinigungen, Keime od. dgl. in den Spritzenzylinder 13 gelangen können. Von Vorteil ist ferner, daß bei Sterilbetrieb lediglich der Speicherkörper 20 in Form der Platte 40 sterilisiert werden muß und dies einfach und schnell und reproduzierbar möglich ist und dabei eine Gewähr für eine zuverlässige Sterilisierung gegeben ist. Aufgrund des Schwingantriebes 41 in Form des Schwingförderers 42 wird der Speicherkörper 20 derart in Schwingungen versetzt, daß Gegenstände 11, insbesondere Fertigspritzen 12, die im Bereich des Eingangs 23 dem spiralförmigen Schlitz 21 zugeführt werden, dadurch die Spiralwindungen vom Eingang 23 und somit vom radial inneren Ende ausgehend bis hin zum radial äußeren Ausgang 24 durchlaufen. Der Pufferspeicher 10 kann dabei so gestaltet und eingestellt werden, daß z. B. eine Fördergeschwindigkeit in der Größenordnung von 300 Stück pro Minute erreicht wird. Dadurch, daß die Zuführung beim Eingang 23 am radial inneren Ende und die Abführung beim Ausgang 24 am radial äußeren Ende der spiralförmigen Führungsbahn 22 erfolgt, werden die im Pufferspeicher 10 transportierten Gegenstände 11, insbesondere Fertigspritzen 12, auf dem Weg vom Eingang 23 zum Ausgang 24 zunehmend auf Abstand voneinander gebracht, weil sich durch den Vibrationsantrieb eine nach außen hin größere Schwingungsamplitude ergibt, durch die die Gegenstände 11 auf dem Weg bis hin zum Ausgang 24 auseinandergezogen werden. Die Gegenstände 11, insbesondere Fertigspritzen 12, werden dadurch vereinzelt. Die Gefahr einer etwaigen Beschädigung ist dadurch reduziert, Durch den Schwineantrieb 41 des Pufferspeichers 10 wird somit auch die Betriebssicherheit wesentlich erhöht. Der Pufferspeicher 10 ist LF-tauglich (laminar flow-tauglich)

Man erkennt, daß für die Transportbewegung der Gegenstände 11, insbesondere Fertigspritzen 12, im Speicherkörper 20 kein besonderer, an den Fertigspritzen 12 durch Berührungskontakt angreifender Antrieb erforderlich ist, so daß deswegen der Pufferspeicher 10 nicht nur besonders einfach, kompakt und kostengünstig ist, sondern sich insbesondere deswegen auch gut für einen Sterilbetrieb eignet. Man erkennt ferner, daß aufgrund dessen der Pufferspeicher 10 auch dort eingesetzt werden kann, wo solche Gegenstände 11 aufgenommen und weitertransportiert werden sollen, bei denen oben ein Teil herausragt. Insbesondere ist der Pufferspeicher 10 somit auch als solche Pufferstation zwischen zwei Arbeitsstationen geeignet, in der Fertigspritzen 12 in dem Stadium aufgenommen und transportiert werden sollen, in dem in den gefüllten und bereits mit Kolben versehenen Spritzenzylinder 13 die Kolbenstange eingesetzt ist, die am oberen Ende über den Flansch 15 hinaus nach oben vorsteht.

Bei einem anderen, nicht gezeigten Ausführungsbeispiel ist der Speicherkörper 20 bezüglich der Anzahl der Spiralwindungen der Führungsbahn 22 veränderbar. Hierzu ist am Speicherkörper 20 z. B. mindestens ein passender Ergänzungskörper lösbar anbringbar, der seinerseits einen an die spiralförmige Führungsbahn 22 anschließenden und diese ergänzenden, weiteren spiralförmigen Führungsbahnabschnitt aufweist. Dadurch kann beim Pufferspeicher 10 leicht und einfach die Pufferkapazität an den geforderten Bedarf durch Anbringen eines oder mehrerer Ergänzungskörper angepaßt werden. Der Ergänzungskörper kann z. B. ein zum Speicherkörper 20 etwa konzentrisches Ringelement sein, das z. B. axial auf den Speicherkörper 20 aufgeschoben, in Umfangsrichtung durch Drehung an den Ausgang 24 anschließend angepaßt und in dieser Justierstellung am Speicherkörper 20 lösbar fixiert wird. Auch mehrere solcher Ergänzungskörper sind einsetzbar.

Bei einem anderen, nicht gezeigten Ausführungsbeispiel weist der Pufferspeicher 10, der an einer Stelle der Förderstrecke zwischen zwei Arbeitsstationen plaziert ist, mehrere gleichartig ausgebildete Speicherkörper 20 auf, die z. B. in Reihenschaltung und/oder Parallelschaltung miteinander verbunden und z. B. in Abstand übereinander und/oder nebeneinander angeordnet sind. Bei einer Reihenschaltung erfolgt die Verbindung so, daß der Ausgang 24 der Führungsbahn 22 des ersten Speicherkörpers 20 über einen Transportstreckenabschnitt ähnlich dem Ablaufabschnitt 26 mit dem Eingang der Führungsbahn eines zweiten Speicherkörpers in Verbindung steht.

Bei dem in Fig. 3 gezeigten zweiten Ausführungsbeispiels sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Beim Pufferspeicher 110 in Fig. 3 befindet sich ebenfalls der Schwingantrieb 141 in Form des Schwingförderers 142 unterhalb des Speicherkörpers 120, der auch hier als Platte 140 ausgebildet ist, die die spiralförmige, einen die Gegenstände aufnehmenden Schlitz 121 enthaltende Führungsbahn 122 aufweist. Ersichtlich ist jedoch die Oberseite, die beidseitig des spiralförmigen Schlitzes 121 gebildet ist und auf der die Gegenstände 11, insbesondere Fertigspritzen 12, hängen und vorwärtsbewegt werden, abgestuft. Die Oberseite fällt in Stufen 150, 151 in Fig. 3 von oben nach unten und dabei vorzugsweise von innen nach außen ab. Dadurch ergibt sich ausgehend vom Eingang des spiralförmigen Schlitzes 121 am radial inneren Ende bis hin zum Ausgang am radial äußeren Ende ein Gefälle. Da dieses Gefälle in Transportrichtung verläuft, unterstützt es somit die Transportbewegung.

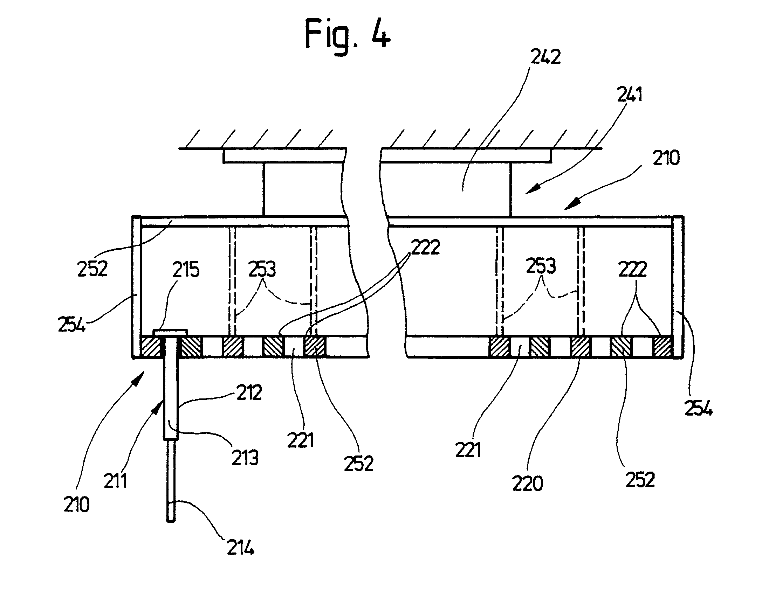

Beim dritten Ausführungsbeispiel in Fig. 4 ist der Pufferspeicher 210, abweichend von der stehenden Ausbildung beim ersten und zweiten Ausführungsbeispiel, hängend angeordnet. Der Speicherkörper 220 weist wiederum eine spiralförmige, einen die Gegenstände 211, insbesondere Fertigspritzen 212, aufnehmenden Schlitz 221 enthaltende Führungsbahn 222 auf. Der gebildete Schlitz 221 hat aber nur eine geringe Tiefe, so daß die mittels ihres Flansches 215 hängend gehaltenen und so vorwärtstransportierten Gegenstände 11, insbesondere Fertigspritzen 12, auf ihrem außerhalb des Schlitzes 221 befindlichen Längenbereich frei nach unten hin abstehen und keinerlei etwaige Wandberührung mit dem Speicherkörper 220 haben. Der Speicherkörper 220 kann in dieser Weise z. B. aus einer Platte relativ geringer Dicke gebildet sein oder er ist aus spiralförmig verlaufenden Leisten 252, Schienen od. dgl. gebildet, die unter Belassung des Schlitzes 221 dazwischen spiralförmig gewunden sind. Statt dessen können auch Profilleisten, Stege od. dgl. dazu herangezogen werden, die möglicherweise ein in sich steifes und starres Gebilde für den Speicherkörper 220 darstellen. Sollte dieses Gebilde in sich nicht starr sein, dienen zur zusätzlichen Halterung in Fig. 4 gestrichelt angedeutete Haltestreben 253. Der Der Speicherkörper 220 ist über diese Haltestreben 253 sowie randseitige Haltestreben 254 hängend an einem Zwischenträger 255 gehalten. der seinerseits am Schwingantrieb 241 in Gestalt eines Schwingförderers 242 befestigt ist, der sich hier oberhalb des Speicherkörpers 220 befindet. Bei dieser Anordnung ist der Bereich unterhalb des Speicherkörpers 220 frei und somit frei zugänglich.

Man erkennt, daß auch eine Kombination eines derart ausgebildeten Pufferspeichers 210 in Parallelschaltung und/oder Reihenschaltung mit einem Pufferspeicher gemäß dem ersten Ausführungsbeispiel und/oder dem zweiten Ausführungsbeispiel sowie auch eine stehende Ausbildung anstelle der hängenden im Rahmen der Erfindung liegt.

Bei allen Ausführungsformen ermöglicht die spiralförmige Führungsbahn die Bildung einer langen Pufferstrecke auf relativ kleinem Raum, so daß auf engem Raum ein großes Speichervolumen erreicht ist. Die Gegenstände, insbesondere Fertigspritzen, werden zuverlässig und ohne die Gefahr einer etwaigen Staubildung sowie die Gefahr einer Beschädigung transportiert, wobei die Transportgeschwindigkeit im Bereich des Schwingantriebes zumindest in Grenzen noch einstellbar sein kann. Der Schwingantrieb gewährleistet einen zuverlässigen Transport schon deswegen, weil die Gegenstände, insbesondere Fertigspritzen, nicht in Transportrichtung geschoben werden müssen, sondern aufgrund der Vibration durch Wurfbewegung vorwärtstransportiert werden, bei der sich der Flansch 15 kurzzeitig von der Oberfläche, auf der er aufsitzt, löst und der Gegenstand 11, insbesondere die Fertigspritze 12, dabei eine Sprungbewegung in Transportrichtung vollführt.

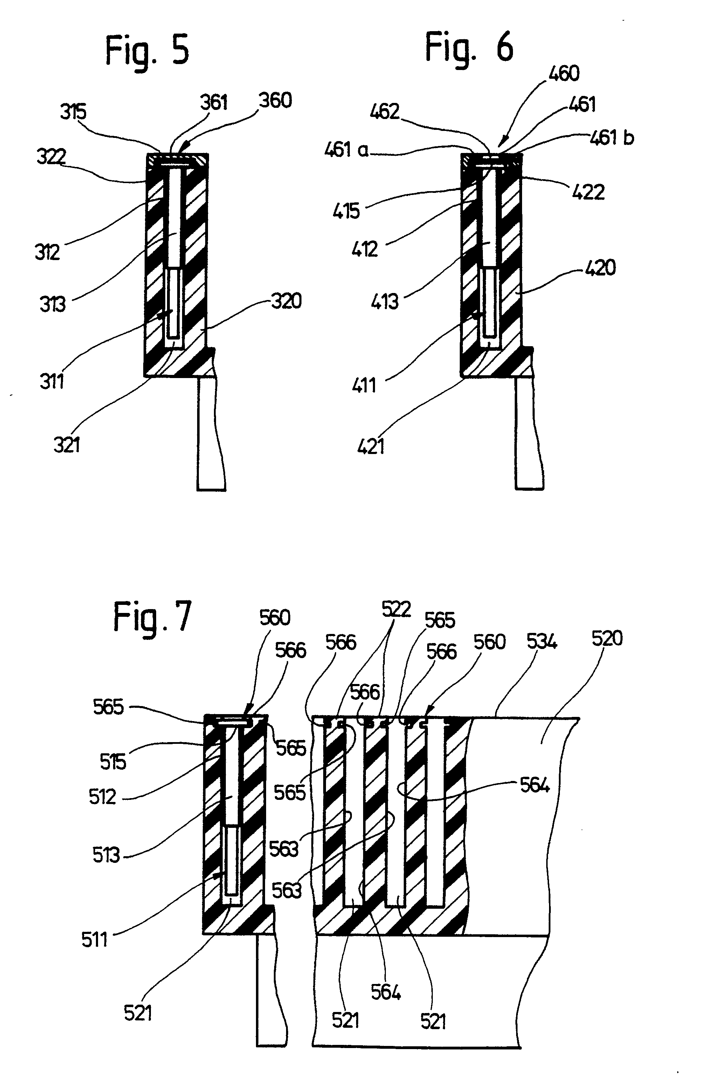

Bei dem vierten Ausführungsbeispiel in Fig. 5 ist jeder Speicherkörper 320 und ggf. auch jeder Ergänzungskörper und wahlweise, jedoch zweckmäßigerweise, auch der entsprechend Fig. 1 gestaltete Zulaufabschnitt 25 und Ablaufabschnitt 26 mit einer oberen Niederhalteeinrichtung 360 versehen, entlang der die transportierten Gegenstände 311, 312 mit ihrem jeweils überkragenden Flansch 315 geführt und in zumindest einer diesem Flansch 315 abgewandten und dazu etwa rechtwinkligen Richtung, nämlich in Fig. 5 nach unten, niedergehalten werden. Diese Niederhalteeinrichtung 360 hat den Vorteil, daß die einzelnen Gegenstände 312 mit ihren Flanschen 315 nicht übereinandergeschoben werden können. Somit ist jegliche Beschädigungsgefahr auch diesbezüglich gebannt.

Bei dem vierten Ausführungsbeispiel in Fig. 5 weist diese Niederhalteeinrichtung 360 eine die Gegenstände 311, 312 an deren Flansch 315 von oben her niederhaltende Leiste 361 auf, die oberseitig des Speicherkörpers 320 und/oder des entsprechend Fig. 1 gestalteten Zulaufabschnittes 25 und/oder Ablaufabschnittes 26 angeordnet ist und die den darin enthaltenen Schlitz 321 oben gänzlich übergreift (Fig. 5). Beim fünften Ausführungsbeispiel in Fig. 6 dagegen übergreift die Leiste 461 der Niederhalteeinrichtung 460 den Schlitz 421 nur beidseitig, d.h. am linken Rand und am rechten Rand. Diese Ausführungsform mit nur randseitiger Übergreifung des Schlitzes 421 durch zwei Leistenteile 461a, 461b der Leiste 461 ist deswegen von besonderem Vorteil, weil dann längs der Führungsbahn 422 ein Schlitz 462 zwischen der Leiste 461 verbleibt, so daß auch solche Gegenstände 411 nach wie vor transportiert werden können, z.B. Fertigspritzen 412, aus deren Spritzenzylinder 413 eine in Fig. 6 nicht gezeigte Kolbenstange nach oben herausragt.

Statt einer den Schlitz 321 oben gänzlich überdeckenden Leiste 361 (Fig. 5) oder einer den Schlitz 421 oben zumindest beidseitig übergreifenden Leiste 461 mit zwei Leistenteilen 461a, 461b (Fig. 6) ist bei dem sechsten Ausführungsbeispiel in Fig. 7 die Niederhalteeinrichtung 560 durch oben innerhalb der Wände 563, 564 des Schlitzes 521 im Speicherkörper 520 und/oder Zulaufabschnitt und/oder Ablaufabschnitt enthaltene Längsnuten 565, 566 gebildet, welche die Flansche 515 der Gegenstände 511 aufnehmen und führen. In diesem Fall verlaufen somit die Flansche 515, verglichen mit Fig. 2 und 4, nicht auf der Oberseite 534, sondern mit zumindest geringem Abstand unterhalb dieser.

**Patentansprüche**

1. Pufferspeicher für längliche Gegenstände, die in etwa senkrechter Lage tansportiert werden, mit mindestens einem Speicherkörper, der eine spiralförmige, einen die Gegenstände aufnehmenden Schlitz enthaltende Führungsbahn aufweist, deren Eingang an einen Zulaufabschnitt und deren Ausgang an einen Ablaufabschnitt einer Transportstrecke anschließbar sind, **gekennzeichnet durch** zumindest einen den Speicherkörper (20; 120; 220) in - die Gegenstände (11; 211) in der Führungsbahn (22; 122; 222) in Transportrichtung vorwärtsbewegende - Schwingungen versetzenden Schwingantrieb (41; 141; 241).

2. Pufferspeicher nach Anspruch 1, **dadurch gekennzeichnet**, daß der Schwingantrieb (41; 141; 241) als Schwingförderer (42; 142; 242) ausgebildet ist.

3. Pufferspeicher nach Anspruch 1 oder 2, **dadurch gekennzeichnet**, daß der Speicherkörper (20; 120; 220) mit der Antriebseinheit des Schwingantriebes (41; 141; 241), insbesondere des Schwingförderers (42; 142; 242), verbunden ist.

4. Pufferspeicher nach einem der Ansprüche 1 - 3, **dadurch gekennzeichnet**, daß der Schwingantrieb (41; 141; 241) unterhalb oder oberhalb (Fig. 4) des Speicherkörpers (20; 120; 220) angeordnet ist.

5. Pufferspeicher nach einem der Ansprüche 1 - 4, **dadurch gekennzeichnet**, daß der an den Zulaufabschnitt (25) anschließbare Eingang (23) der Führungsbahn (22; 122; 222) am radial inneren Ende der Führungsbahn (22; 122; 222) vorgesehen ist.

6. Pufferspeicher nach einem der Ansprüche 1 - 5, **dadurch gekennzeichnet**, daß der an den Ablaufabschnitt (26) anschließbare Ausgang (24) am radial äußeren Ende der Führungsbahn (22; 122; 222) vorgesehen ist.

7. Pufferspeicher nach einem der Ansprüche 1 - 6, **dadurch gekennzeichnet**, daß der Zulaufabschnitt (25) als schräg zum Eingang (23) abfallende Zuführrutsche (28) mit einem Schlitz (29) für die Zuführung der Gegenstände (11, 12) ausgebildet ist, der in die Führungsbahn (22) überleitet.

8. Pufferspeicher nach Anspruch 7, **dadurch gekennzeichnet**, daß die Zuführrutsche (28) etwa tangential zu dem innersten Spiralgang der Führungsbahn (22) ausgerichtet ist.

9. Pufferspeicher nach einem der Ansprüche 1 - 8, **dadurch gekennzeichnet**, daß der Ablaufabschnitt (26) als an das Niveau des Ausgangs (24) der Führungsbahn (22) anschließende Abführrutsche (31) mit einem Schlitz (32) für die Führung der Gegenstände (11, 12) ausgebildet ist, der von der Führungsbahn (22) ableitet.

10. Pufferspeicher nach Anspruch 9, **dadurch gekennzeichnet**, daß die Abführrutsche (31) horizontal oder vom Ausgang (24) ausgehend abfallend verläuft.

11. Pufferspeicher nach Anspruch 9 oder 10, **dadurch gekennzeichnet**, daß die Abführrutsche (31) etwa tangential zu dem äußersten Spiralgang der Führungsbahn (22; 122; 222) ausgerichtet ist.

12. Pufferspeicher nach einem der Ansprüche 7 - 11, **dadurch gekennzeichnet**, daß die Zuführrutsche (28) und/oder die Abführrutsche (31) als Hängehalterung für die Gegenstände (11, 12) ausgebildet sind.

13. Pufferspeicher nach einem der Ansprüche 1 - 12, **dadurch gekennzeichnet**, daß der Speicherkörper (20; 120; 222) bezüglich der Anzahl der Spiralwindungen der Führungsbahn (22; 122; 222) veränderbar ist.

14. Pufferspeicher nach Anspruch 13, **dadurch**

gekennzeichnet, daß am Speicherkörper (20; 120; 220) mindestens ein Ergänzungskörper lösbar anbringbar ist, der einen an die spiralförmige Führungsbahn (22; 122; 222) anschließenden und diese ergänzenden, weiteren spiralförmigen Führungsbahnabschnitt aufweist.

15. Pufferspeicher nach einem der Ansprüche 1 - 14, **gekennzeichnet durch** mehrere, vorzugsweise gleichartig ausgebildete, Speicherkörper (20; 120; 220).

16. Pufferspeicher nach Anspruch 15, **dadurch gekennzeichnet**, daß die Speicherkörper (20; 120; 220) in Reihenschaltung und/oder in Parallelschaltung miteinander verbunden sind.

17. Pufferspeicher nach Anspruch 15 oder 16, **dadurch gekennzeichnet**, daß die Speicherkörper (20; 120; 220) in Abstand übereinander und/oder nebeneinander angeordnet sind.

18. Pufferspeicher nach einem der Ansprüche 15 - 17, **dadurch gekennzeichnet**, daß der Ausgang der Führungsbahn (22, 122; 222) eines ersten Speicherkörpers (20; 120; 220) über einen Transportstreckenabschnitt mit dem Eingang der Führungsbahn eines zweiten Speicherkörpers in Verbindung steht.

19. Pufferspeicher nach einem der Ansprüche 1 - 18, **dadurch gekennzeichnet**, daß die spiralförmige Führungsbahn (22; 122; 222) jedes Speicherkörpers (20; 120; 220) und ggf. Ergänzungskörpers als Hängehalterung für die Gegenstände (11, 12; 211, 212) ausgebildet ist.

20. Pufferspeicher nach Anspruch 19, **dadurch gekennzeichnet**, daß die spiralförmige Führungsbahn (22; 122; 222) beidseitig des Schlitzes (21; 121; 221) diesen begrenzende Wandteile aufweist, auf deren Oberseite (34) die Gegenstände (11, 12; 211, 212) jeweils mit einem radial davon abstehenden und überkragenden Flansch (15; 215) aufliegen und in Transportrichtung vorwärtsbewegt werden.

21. Pufferspeicher nach einem der Ansprüche 1 - 20, **dadurch gekennzeichnet**, daß jeder Speicherkörper (220) und ggf. Ergänzungskörper aus den spiralförmigen Schlitz (221) dazwischen bildenden, spiralförmig verlaufenden Leisten (252), Schienen od. dgl. gebildet ist.

22. Pufferspeicher nach einem der Ansprüche 1 - 21, **dadurch gekennzeichnet**, daß jeder Speicherkörper (20; 120) und ggf. Ergänzungskörper eine Platte (40; 140) aufweist, die einen spiralförmigen Schlitz (21; 121) als Führungsbahn (22; 122) enthält.

23. Pufferspeicher nach einem der Ansprüche 1 - 22 , **dadurch gekennzeichnet**, daß die beidseitig des spiralförmigen Schlitzes (21; 221) gebildete Oberseite, auf der die Gegenstände (11, 12; 211, 212) jeweils hängen und vorwärtsbewegt werden, bei allen Spiralwindungen innerhalb einer allen gemeinsamen Ebene verläuft.

24. Pufferspeicher nach Anspruch 23, **dadurch gekennzeichnet**, daß die allen Spiralwindungen gemeinsame Ebene waagerecht verläuft.

25. Pufferspeicher nach einem der Ansprüche 1 - 22, **dadurch gekennzeichnet**, daß die beidseitig des spiralförmigen Schlitzes (121) gebildete Oberseite, auf der die Gegenstände jeweils hängen und vorwärtsbewegt werden, in Stufen (150, 151) von oben nach unten und dabei vorzugsweise von innen nach außen abfällt.

26. Pufferspeicher nach einem der Ansprüche 1 - 25, **dadurch gekennzeichnet**, daß der mindestens eine Speicherkörper (2O; 120; 220) und ggf. der Ergänzungskörper zumindest auf den mit den Gegenständen (11, 12; 211, 212) in Berührung gelangenden Flächen aus einem Material mit guten Gleiteigenschaften und Antihafteigenschaften besteht.

27. Pufferspeicher nach einem der Ansprüche 1 - 26, **dadurchgekennzeichnet**, daß der mindestens eine Speicherkörper (20; 120; 220) und ggf. Ergänzungskörper aus Kunststoff besteht.

28. Pufferspeicher nach Anspruch 27, **dadurch gekennzeichnet**, daß der mindestens eine Speicherkörper (20; 120; 220) und ggf. der Ergänzungskörper aus Polyäthylen besteht.

29. Pufferspeicher nach einem der Ansprüche 1 - 28, **gekennzeichnet durch** die Ausbildung als Transporteinrichtung für Fertigspritzen (12; 212), noch nicht gefüllt oder bereits gefüllt, im letzteren Fall z. B. auch mit aus dem Spritzenzylinder (13; 213) herausragender Kolbenstange.

30. Pufferspeicher nach einem der Ansprüche 1 - 29, **dadurch gekennzeichnet,** daß die spiralförmige Führungsnut (22; 122; 222; 322; 422; 522) und/oder der Zulaufabschnitt (25) und/oder der Ablaufabschnitt (26) eine obere Niederhalteeinrichtung (360; 460; 560) aufweist, entlang der die Gegenstände (11, 12; 211, 212; 311, 312; 411, 412; 511, 512) mit ihrem jeweils überkragenden Flansch (15; 215; 315; 415; 515) geführt und in zumindest einer dem Flansch abgewandten und dazu etwa rechtwinkligen Richtung niedergehalten werden.

31. Pufferspeicher nach Anspruch 30, **dadurch gekennzeichnet,** daß die Niederhalteeinrichtung (460) eine den Schlitz (21; 121; 221; 321; 421 bzw. 29 bzw. 32) der spiralförmigen Führungsbahn (22; 122; 222; 322; 422) und/oder des Zulaufabschnitts (25) und/oder des Ablaufabschnitts (26) gänzlich oder zumindest beidseitig, vorzugsweise nur randseitig, übergreifende und die Gegenstände (11, 12; 211, 212; 311, 312; 411, 412) an ihrem Flansch (15; 215; 315; 415) von oben her niederhaltende Leiste (361; 461, 461a, 461b) aufweist.

32. Pufferspeicher nach Anspruch 30, **dadurch gekennzeichnet,** daß die Niederhalteeinrichtung (560) in beiden Wänden (563, 564) des Schlitzes (521 bzw. 29 bzw. 32) der spiralförmigen Führungsbahn (522) und/oder des Zulaufabschnitts (25) und/oder des Ablaufabschnitts (26) die Flansche (515) der Gegenstände (511, 512) aufnehmende und führende Längsnuten (565, 566) aufweist.

# Fig. 1

# Fig. 2

# Fig. 3

# Fig. 4

EP 0 451 344 A1

Fig. 5

Fig. 6

Fig. 7

Europäisches
Patentamt

EUROPÄISCHER
RECHERCHENBERICHT

Nummer der Anmeldung

EP 90 12 3046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-3 713 524 (HAMMOUDA) <br> * Ansprüche 1,2,4,6; Abbildungen 1,3,7,9 * <br> – – – | 1-4,9-10, 12,15-24 | B 65 G 27/02 <br> B 65 G 47/51 |
| Y | DE-A-1 957 000 (CONDECO AUTOMATION INC.) <br> * Ansprüche 1,5,6,7,8 * * Seite 3, Zeile 5 - Seite 3, Zeile 9 @ <br> Seite 10, Zeile 25 - Seite 11, Zeile 5; Abbildung 12 * <br> – – – | 1-4,9-10, 12,15-24 | |
| A | US-A-4 021 902 (ROLAND) <br> * Zusammenfassung * <br> – – – | 1-14 | |
| A | CH-A-4 323 63 (AJEM LABORATORIES) <br> * das ganze Dokument * <br> – – – – – | 1-32 | |
| | | | RECHERCHIERTE SACHGEBIETE (Int. Cl.5) |
| | | | B 65 G |

Der vorliegende Recherchenbericht wurde für alle Patentansprüche erstellt

| Recherchenort | Abschlußdatum der Recherche | Prüfer |
|---|---|---|
| Den Haag | 24 Juli 91 | BEERNAERT J.E. |